(19) **Europäisches Patentamt / European Patent Office / Office européen des brevets**

(11) **EP 3 281 375 B1**

(12) ## FASCICULE DE BREVET EUROPEEN

(45) Date de publication et mention de la délivrance du brevet:
**19.10.2022 Bulletin 2022/42**

(21) Numéro de dépôt: **16718238.5**

(22) Date de dépôt: **07.04.2016**

(51) Classification Internationale des Brevets (IPC):
**H04L 27/26** (2006.01)

(52) Classification Coopérative des Brevets (CPC):
**H04L 27/2623; H04L 27/26; H04L 27/2614**

(86) Numéro de dépôt international:
**PCT/EP2016/057633**

(87) Numéro de publication internationale:
**WO 2016/162429 (13.10.2016 Gazette 2016/41)**

(54) **PROCEDE DE REDUCTION DU FACTEUR CRETE D'UNE EMISSION MULTICANAUX PAR ECRETAGE/FILTRAGE INTELLIGENT ET ADAPTATIF**

VERFAHREN ZUR REDUZIERUNG DES PEAK-FAKTORS EINER MEHRKANALIGEN EMISSION DURCH INTELLIGENTE UND ADAPTIVE BEGRENZUNG/FILTERUNG

METHOD OF REDUCING THE PEAK FACTOR OF A MULTICHANNEL EMISSION BY INTELLIGENT AND ADAPTIVE CLIPPING/FILTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2015 FR 1500738**

(43) Date de publication de la demande:
**14.02.2018 Bulletin 2018/07**

(73) Titulaire: **Thales**
**92400 Courbevoie (FR)**

(72) Inventeurs:
- **TRAVERSO, Sylvain**
  **92230 Gennevilliers (FR)**
- **ROGIER, Jean-Luc**
  **92230 Gennevilliers (FR)**
- **BERNIER, Jean-Yves**
  **1480 Tubize (BE)**

(74) Mandataire: **Atout PI Laplace**
**Immeuble "Visium"**
**22, avenue Aristide Briand**
**94117 Arcueil Cedex (FR)**

(56) Documents cités:
**US-A1- 2013 163 512** **US-B1- 7 313 373**

- **LOPEZ DAVID ET AL: "Peak cancellation and digital predistortion of high-order QAM wideband signals for next generation wireless backhaul equipment", 2014 INTERNATIONAL WORKSHOP ON INTEGRATED NONLINEAR MICROWAVE AND MILLIMETRE-WAVE CIRCUITS (INMMIC), IEEE, 2 avril 2014 (2014-04-02), pages 1-3, XP032595458, DOI: 10.1109/INMMIC.2014.6815111**
- **HAO CHEN ET AL: "Multi-dimensional crest factor reduction and digital predistortion for multi-band radio-over-fiber links", OPTICS EXPRESS, vol. 22, no. 17, 25 août 2014 (2014-08-25), page 20982, XP055254954, ISSN: 2161-2072, DOI: 10.1364/OE.22.020982**
- **GAURAW KUMAR SRIVASTAVA ET AL: "Crest factor reduction for carrier aggregated OFDM systems", SOFTWARE, TELECOMMUNICATIONS AND COMPUTER NETWORKS (SOFTCOM), 2012 20TH INTERNATIONAL CONFERENCE ON, IEEE, 11 September 2012 (2012-09-11), pages 1-6, XP032470608, ISBN: 978-1-4673-2710-7**

**Description**

L'invention se situe dans le domaine des communications multicanaux, et concerne plus particulièrement un procédé de réduction du facteur crête d'un signal multicanaux émis dans la bande des hautes fréquences.

Les liens HF (acronyme pour Haute Fréquence, situés entre 3MHz et 30MHz) offrent une capacité de communication hors ligne de vue permettant de réaliser des communications à longue, voire très longue distance, sans nécessiter le recours à un satellite ou à des stations relais.

Pour ceci, les communications en bande HF utilisent les propriétés de réflexion des couches ionosphériques pour ces fréquences. L'inconvénient de l'utilisation de cette bande provient de ce que, selon la position des couches ionosphériques, la qualité de propagation n'est pas identique sur l'ensemble de la bande. Ainsi, la bande HF est généralement divisée en canaux, ce qui permet d'allouer la ressource fréquentielle à différents utilisateurs, d'apporter de la diversité fréquentielle à une communication, mais également d'adapter l'utilisation de la ressource fréquentielle à la qualité de transmission des différents canaux, cette qualité variant en fonction de l'instant de la journée et de la position géographique.

Parmi les standards de communication utilisant la bande HF, la norme MIL STD 188-110C annexe F, ou la proposition de norme STANAG 4539 annexe H, décrivent l'emploi de plusieurs canaux distincts de 3kHz pour communiquer. L'invention se place en particulier dans le cadre de ce type de transmissions, utilisant plusieurs canaux de 3kHz, mais également dans le cadre de transmissions multicanaux utilisant des canaux de largeur supérieure, comme par exemple dans l'annexe D de la norme MIL STD 188-110C, en bande HF ou dans d'autres bandes de fréquence.

L'invention propose un procédé de réduction du facteur crête, généralement désigné sous le nom de PAPR (acronyme anglais pour Peak-to-Average Power Ratio) de signaux multicanaux. Ce PAPR permet de caractériser la dynamique d'un signal, c'est à dire le rapport entre la puissance crête de ce signal et sa puissance moyenne. Ce type de procédé de réduction du facteur crête est généralement désigné sous l'acronyme de CFR (acronyme anglais pour Crest Factor Réduction).

Les signaux de transmission peuvent être divisés en deux grandes familles :

- les signaux dits à enveloppe constante : ces signaux ont une puissance instantanée constante en fonction du temps, leur PAPR vaut donc 1 (ou 0 dB), et
- les signaux dits à enveloppe non-constante : ces signaux ont une variation plus ou moins importante de la puissance instantanée en fonction du temps. Pour ce type de signaux, le PAPR peut atteindre des valeurs de l'ordre allant jusqu'à 12 dB.

Les signaux HF multicanaux appartiennent à la famille des signaux à enveloppe non-constante. Selon le nombre de canaux utilisés, le PAPR peut varier entre 3.7 dB (1 porteuse) et 12 dB (16 porteuses).

Afin de maximiser le bilan de liaison d'une communication, il est nécessaire d'amplifier le signal avant de le transmettre. Cette amplification se fait généralement à l'aide d'un amplificateur de puissance analogique. En simplifiant grossièrement le comportement de l'amplificateur de puissance, il est possible de définir trois zones de fonctionnement :

- la zone linéaire : les échantillons à la sortie de l'amplificateur de puissance sont une version amplifiée linéairement des échantillons à l'entrée de l'amplificateur de puissance,
- la zone de compression : les échantillons à la sortie de l'amplificateur de puissance sont comprimés par la non linéarité de l'amplificateur de puissance,
- la zone de saturation : les échantillons à la sortie de l'amplificateur de puissance sont saturés par la non linéarité de l'amplificateur de puissance.

Le point de fonctionnement de l'amplificateur de puissance est appelé OBO (acronyme anglais pour Output BackOff), et correspond à la différence entre la puissance de saturation de l'amplificateur de puissance et la puissance moyenne, à la sortie de l'amplificateur de puissance. Ce point de fonctionnement est lié au PAPR du signal à transmettre. En effet, la puissance crête de l'amplificateur de puissance étant fixée, la puissance moyenne, et donc le rendement de l'amplificateur, est d'autant plus faible que le PAPR est élevé.

Plus le point de fonctionnement est haut, plus le rendement de l'amplificateur est important. Un rendement faible est synonyme de consommation élevée et d'augmentation de la taille de l'amplificateur de puissance. L'utilisation d'un point de fonctionnement trop élevé entraine l'amplification d'une partie du signal dans la zone non linéaire de l'amplificateur de puissance (zones de compression et de saturation), ce qui dégrade le spectre du signal émis.

Les signaux à transmettre devant généralement respecter des gabarits spectraux très contraignants, la réduction du PAPR du signal à transmettre dans le respect de ces contraintes est donc un point clé de la performance d'un poste radio.

Il est connu dans l'état de l'art différentes techniques de réduction du PAPR d'un signal à transmettre.

Une première technique, connue sous le terme d'écrêtage, consiste à limiter les pics de puissance du signal à transmettre afin de réduire le PAPR. L'écrêtage du signal venant dégrader le spectre du signal émis, ces solutions deviennent très vite inefficaces dès lors qu'il faut tenir un gabarit spectral d'émission exigeant.

Une deuxième technique consiste à utiliser des solutions par codage, qui réduisent efficacement la dynamique en puissance du signal tout en assurant une parfaite tenue d'un gabarit spectral d'émission. L'inconvénient de ces solutions provient de la diminution de l'efficacité spectrale naturellement induite par les techniques de codage. De plus, ces solutions sont souvent complexes à implémenter et nécessitent des traitements couplés au modem.

Une troisième technique s'appuie sur des extensions de constellations. Les solutions par extension de constellation réduisent efficacement la dynamique en puissance du signal tout en assurant une parfaite tenue d'un gabarit spectral d'émission. Cependant, l'inconvénient majeur de ces solutions est la faible capacité de réduction de PAPR lorsque peu de canaux en parallèle sont considérés (modulation multi porteuses avec peu de porteuses). De plus, ces solutions sont souvent complexes à implémenter et nécessitent des traitements couplés au modem.

Enfin, une quatrième technique consiste à ajouter du signal au signal utile avant le passage à travers l'amplificateur de puissance. Ce signal est généralement situé en dehors de la bande utile, et sera supprimé par le filtre radio d'émission situé en sortie de la chaîne radio. Cette technique requiert l'utilisation d'un amplificateur plus large bande, et d'un filtre radio d'émission ajusté précisément au gabarit du signal émis, et ajustable aux variations de largeur de bande souhaitées. De tels filtres sont généralement volumineux car travaillant sur des signaux de fortes puissances.

Il est connu des méthodes, comme dans la demande internationale PCT WO 2013/123580 A1, qui combinent écrêtage et ajout de signal. Cependant, dans la demande de brevet, le signal est ajouté en dehors de la bande du signal, ce qui déporte la complexité de réalisation vers le filtre radio d'émission. Le procédé de réduction du facteur crête divulgué par cette demande ne permet pas d'utiliser la connaissance du gabarit spectral d'émission dans sa globalité pour réduire plus efficacement le PAPR, et de tirer profit de l'aspect multicanaux propre aux transmissions HF.

Il est également connu des méthodes, comme celle présentée dans l'article de Lopez David et al., Peak Cancellation and Digital Predistortion of High-Order QAM Wideband Signals for Next Generation Wireless Backhaul Equipment, 2014 International workshop on integrated non linear microwave and millimetre-wave, 2 avril 2014, qui combinent écrêtage et filtrage du signal de crête d'un signal multiporteuse. Cependant, le signal de crête est filtré par un filtre passe bas passant sur l'ensemble de la bande du signal multiporteuse, qui ne permet pas de contrôler les remontées de spectre à l'intérieur de cette bande. D'autres solutions présentent les mêmes inconvénients, comme par exemple celle de l'article de Gauraw Kmar Strivastava et al., « Crest factor reduction for carrier aggregated OFDM systems », Software, Telecommunications and computer networks, 2012 20th international conférence on, IEEE, 11 septembre 2012, qui propose d'écrêter et de filtrer des agrégations de signaux OFDM à travers un étage d'écrêtage/filtrage de chaque signal OFDM pris indépendamment, et un étage d'écrêtage commun puis de filtrage du signal de crête résultant en parallèle sur plusieurs canaux fréquentiels.

Enfin, les solutions connues de l'art antérieur ne permettent pas à la fois :

- d'être agnostique du type de modulation transmis,
- d'utiliser l'ensemble des canaux disponibles pour la transmission, et
- de réduire efficacement le PAPR en fonction du gabarit spectral d'émission.

Pour ceci, le procédé selon l'invention propose de combiner des techniques d'écrêtage du signal utile et de filtrage adapté au gabarit d'émission, pour réduire le facteur crête du signal transmis. Ainsi, le procédé permet de diminuer le PAPR en tolérant la transmission de produits d'intermodulations à des fréquences et niveaux de puissances spécifiques, de manière à tenir un gabarit spectral prédéfini.

La solution proposée réalise des traitements sur le signal à la sortie du modem, en amont de l'étage d'amplification. Elle ne nécessite pas d'interaction avec le modem, et est de ce fait agnostique du type de modulation utilisé. Elle s'adapte au plus juste au gabarit spectral d'émission, afin de réduire le plus possible le PAPR du signal transmis, et permet l'utilisation de canaux de transmission supplémentaires dédiés à la réduction du facteur crête du signal.

L'invention consiste donc en un procédé de réduction du facteur crête d'un signal transmis dans une bande de fréquence comprenant plusieurs canaux, le signal utilisant une pluralité de canaux dans la bande. Le procédé est caractérisé en ce qu'il comporte :

- une étape d'écrêtage dudit signal,
- une étape de soustraction dudit signal écrêté audit signal, afin d'obtenir un signal de crête,
- une étape de filtrage dudit signal de crête à l'aide d'un filtre multicanaux configuré pour respecter un gabarit spectral prédéterminé pour chacun des canaux utilisés par le signal, et
- une étape de soustraction du signal de crête filtré au signal.

Avantageusement, le gabarit spectral du filtre multicanaux est prédéterminé pour chacun des canaux en fonction d'un niveau de puissance maximum admissible dans des sous bandes de ce canal et de ses canaux adjacents.

Selon un mode de réalisation du procédé, au moins un canal de ladite bande de fréquence, n'est pas utilisé par le signal.

Dans un autre mode de réalisation du procédé, le filtre multicanaux est en outre adapté pour ne pas rejeter au moins un canal de la bande de fréquence non utilisé par le signal.

Avantageusement, le canal de la bande de fréquence non utilisé par ledit signal est sélectionné parmi les canaux dont le rapport signal à bruit est le moins bon.

Selon un autre mode de réalisation du procédé, l'étape d'écrêtage du signal est un écrêtage profond, permettant de limiter les remontées de puissance du signal filtré.

Selon un autre mode de réalisation du procédé, les étapes d'écrêtage du signal, d'obtention d'un signal de crête, de filtrage du signal de crête, et de soustraction du signal de crête filtré au signal sont réalisées itérativement.

Avantageusement, l'étape de filtrage du signal de crêtes utilise un filtre multicanaux réalisé à partir d'un filtre prototype associé à un gabarit spectral, ledit filtre multicanaux étant obtenu par la sommation dudit filtre prototype décalé en fréquence pour chacun des canaux.

Avantageusement, les étapes sont réalisées sur un signal numérique en bande de base, en sortie de modem.

L'invention concerne également un dispositif d'émission d'un signal dans une bande de fréquence comprenant plusieurs canaux, ledit signal utilisant une pluralité de canaux dans la bande. Le dispositif est caractérisé en ce qu'il met en œuvre un procédé de réduction du facteur crête dudit signal décrit précédemment, et comprenant :

- un module d'écrêtage du signal,
- un module de calcul d'un signal de crête, par soustraction d'un signal écrêté au dit signal,
- un module de filtrage d'un signal de crête à l'aide d'un filtre multicanaux configuré pour respecter un gabarit spectral prédéterminé pour chacun des canaux utilisés par le signal,
- un module de soustraction d'un signal de crête filtré audit signal.

Selon un mode de réalisation, le dispositif d'émission transmet dans la bande des Hautes Fréquences.

L'invention sera mieux comprise et d'autres caractéristiques et avantages apparaîtront mieux à la lecture de la description qui suit, donnée à titre non limitatif, et grâce aux figures annexées parmi lesquelles :

- la figure 1 présente les étapes mises en œuvre par le procédé selon un mode de réalisation de l'invention,
- la figure 2 est une représentation fréquentielle du signal à différentes étapes du procédé selon un mode de réalisation de l'invention, dans laquelle une seule porteuse est représentée,

- la figure 3 est une représentation fréquentielle du signal à différentes étapes du procédé selon un mode de réalisation de l'invention, dans lequel le signal multicanaux est transmis sur cinq canaux,
- la figure 4a présente un exemple de la réponse impulsionnelle d'un filtre multicanaux utilisé dans le procédé selon l'invention,
- la figure 4b présente un exemple de la réponse fréquentielle d'un filtre multicanaux utilisé dans le procédé selon l'invention,
- la figure 5 est une représentation fréquentielle du signal à différentes étapes du procédé selon un mode de réalisation de l'invention lorsqu'il est appliqué à un signal multicanaux comprenant cinq canaux pour la transmission du signal utile et deux canaux dédiés à la réduction du facteur crête,
- la figure 6 illustre la différence entre le mécanisme d'écrêtage profond et un écrêtage traditionnel,
- la figure 7 donne les performances du procédé de réduction du facteur crête selon l'invention dans un de ses modes de réalisation,
- la figure 8 présente le procédé selon un mode de réalisation itératif de l'invention.

L'invention s'applique donc à un signal composé de plusieurs canaux, ayant chacun une largeur de bande pouvant être identique ou différente, les différents canaux pouvant être attribués à différentes transmissions (comme par exemple dans le cas d'un signal émis depuis une station de base GSM), ou à une même transmission.

Le signal est émis par un équipement d'émission comprenant un modem destiné à mettre en forme le signal, et d'une chaîne radio comprenant des éléments permettant de transposer le signal sur fréquence porteuse et au moins un amplificateur de puissance.

Le signal émis a une largeur de bande correspondant à la largeur du filtre radio d'émission situé en aval de l'amplificateur de puissance, ou, si ce filtre n'existe pas, à l'écart entre le canal à la fréquence la plus élevée et le canal à la fréquence la moins élevée de la transmission.

Dans le cas des transmissions HF, la qualité des canaux de propagation varie au cours de la journée. Selon l'heure, certains canaux sont propices aux transmissions, tandis que d'autres présentent un rapport signal à bruit très dégradé, rendant leur utilisation difficile, voire impossible.

Les allocations de canaux à des transmissions sont donc réalisées au cas par cas, dynamiquement, et peuvent évoluer au fil du temps. C'est le cas par exemple dans la demande de brevet Européen EP 2458 770 A1.

Les différents canaux composant le signal à transmettre ne sont pas systématiquement adjacents. De ce fait, la mise en œuvre d'une solution performante de filtrage du signal ne peut être réalisée à partir d'un unique filtre dont la bande passante correspond à la bande utile totale du signal, mais à partir d'un filtre adapté aux allocations de canaux.

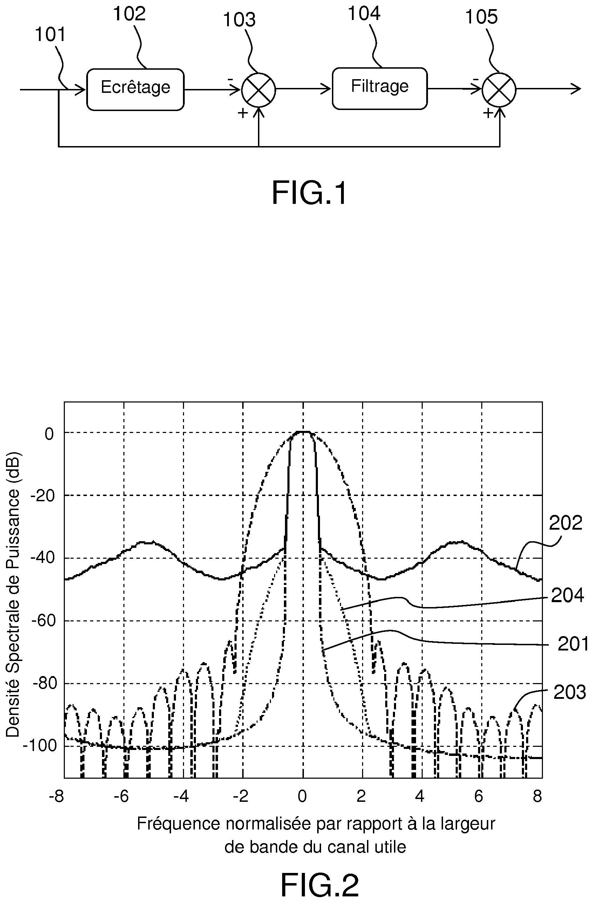

La figure 1 présente les étapes mises en œuvre par le procédé de réduction du PAPR d'un signal multicanaux selon un mode de réalisation de l'invention.

Le procédé comprend une étape 102 d'écrêtage du signal multicanaux 101.

Lors de cette étape d'écrêtage, la puissance du signal est comparée à un seuil. Lorsqu'elle est supérieure à ce seuil, la valeur du signal est ajustée de manière à ce que la puissance du signal soit inférieure ou égale à la valeur du seuil. Lorsque la puissance est inférieure ou égale au seuil, le signal n'est pas modifié.

La valeur du seuil est positionnée en fonction du PAPR cible recherché par le procédé.

Une deuxième étape 103 consiste à générer un signal de crête en réalisant la différence entre le signal à transmettre et le signal écrêté produit lors de l'étape 102. Ce signal de crête correspond à la partie du signal ayant été atténuée lors de l'étape d'écrêtage. En dehors des intervalles temporels associés aux crêtes, le signal de crêtes est nul, ce qui permet de réduire la complexité de calcul de l'étape de filtrage.

Travailler sur un signal de crête plutôt que sur le signal écrêté lors de l'étape de filtrage, permet également d'assurer une meilleure intégrité du signal utile dans les canaux utiles.

Une troisième étape 104 consiste à filtrer le signal de crête, à l'aide d'un filtre multicanaux adapté aux différents canaux utilisés par le signal. La réponse fréquentielle de ce filtre multicanaux est calculée pour atténuer le spectre du signal de crête, de façon différenciée selon la fréquence, afin que son occupation spectrale, en dehors de la bande des canaux utiles, soit contrôlée, non nécessairement nulle mais en deçà d'un gabarit spectral d'émission.

Enfin, une étape 105 de soustraction du signal de crête filtré au signal d'entrée, permet d'obtenir un signal de sortie 106 dont le facteur crête est inférieur au signal initial 101, et dont le gabarit est adapté à un gabarit d'émission.

La figure 2 est une représentation fréquentielle du signal à différentes étapes du procédé selon un mode de réalisation de l'invention. Dans la figure 2, l'observation est limitée à un seul canal.

Dans l'exemple illustré par la figure 2, l'hypothèse est prise que le gabarit spectral d'émission est peu contraignant sur le premier canal adjacent, mais qu'il devient très exigeant dès le second canal adjacent. Considérons par exemple que le niveau requis dans le premier canal adjacent doit se situer à au moins -40 dB par rapport à la puissance du canal considéré, tandis qu'il doit être de -70 dB dans le deuxième canal adjacent. La courbe 201, en alternance points-tirets, représente le spectre du signal initial sur le canal. La courbe 202, en trait plein, représente le spectre d'un signal qui a été écrêté à une valeur proche du PAPR cible. Le spectre de ce signal ne nécessite que très peu de filtrage sur le premier canal adjacent (seulement quelques dB), mais nécessite une forte atténuation pour être en adéquation avec le gabarit sur le second canal adjacent (environ 30 dB). La réponse en fréquence 203, en tirets, du filtre proposé dans cet exemple est donc plutôt douce sur le premier canal adjacent, et forte dès le second canal adjacent, de manière à ce que le spectre du signal 204, en pointillés, après application du procédé selon l'invention, respecte le gabarit d'émission, tout en présentant un facteur crête réduit par rapport au signal initial.

L'étape de filtrage s'appliquant uniquement sur le signal de crête, les contraintes de réalisation du filtre portent principalement sur la réjection hors bande utile, ce qui permet d'utiliser un filtre dont la réponse en fréquence n'est pas nécessairement plate dans la bande utile du signal, sans détériorer l'intégrité du signal utile. Ainsi, la complexité du filtre (équivalente à la longueur de sa réponse impulsionnelle dans le cas d'un filtre à réponse impulsionnelle finie) est réduite.

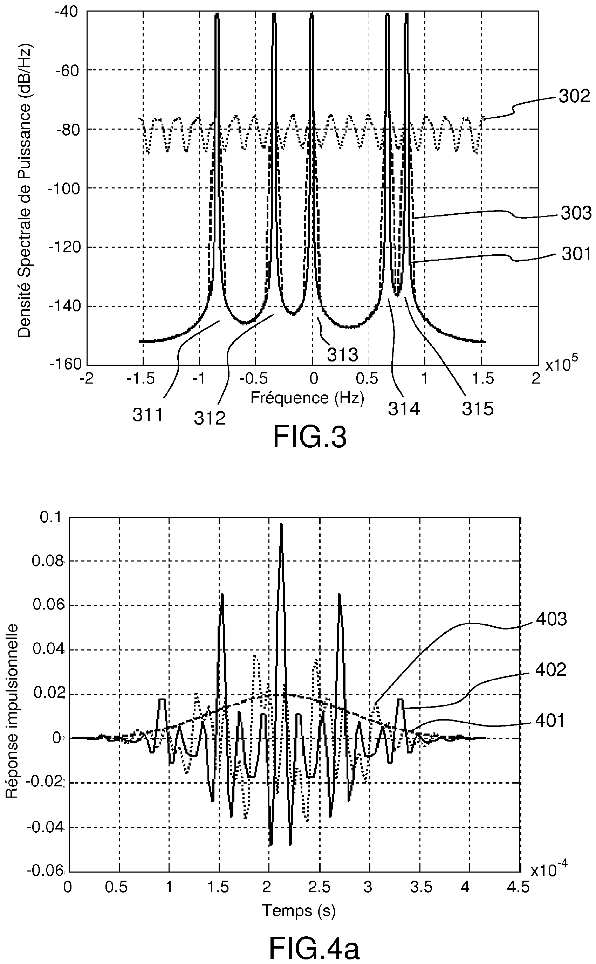

La figure 3 est une représentation fréquentielle du signal à différentes étapes du procédé selon un mode de réalisation de l'invention, dans lequel le signal multicanaux est transmis sur cinq canaux.

Dans la figure 3, la courbe 301, en trait plein, représente le spectre du signal initial, qui utilise cinq canaux 311, 312, 313, 314 et 315. Les canaux peuvent être adjacents ou non.

La courbe 302, en pointillés, représente le signal après l'étape d'écrêtage. La courbe 303, en tirets, représente le signal après application du procédé selon l'invention de réduction du facteur crête.

Dans le procédé selon l'invention, le filtre adapté au signal n'est pas un simple filtre passe bas dont la bande passante comprend l'ensemble de la bande utile du signal, mais un filtre multicanaux précisément ajusté aux canaux utilisés par le signal. Lorsque les canaux utilisés par le signal changent, le filtre multicanaux doit être modifié pour s'adapter aux nouveaux canaux utilisés.

Contrairement à l'utilisation d'un ou plusieurs filtres passe bas pour filtrer le signal de crête, l'objectif du ou des filtres étant d'être passants dans la bande du signal utile et bloquants en dehors de cette bande de manière à rejeter l'ensemble du bruit d'écrêtage situé en dehors de la bande utile, le filtre multicanaux utilisé dans l'invention suit un gabarit prédéterminé sur chacun des canaux utilisés.

Un tel filtre permet de :

- respecter un gabarit spectral d'émission pour chacun des canaux utilisés, et non un gabarit spectral pour l'ensemble du signal multicanaux,
- contrôler les produits d'intermodulation correspondant au signal de crête,
- tolérer des remontées de spectre, dans une proportion contrôlée, dans les canaux utilisés,
- tolérer des remontées de spectre, dans une proportion contrôlée, dans les canaux non utilisés positionnés dans la bande du signal multicanaux.

Dans la figure 3, le filtre multicanaux suit donc un gabarit spectral prédéterminé par les contraintes d'émission sur les canaux adjacents à l'intérieur de la bande du signal multiporteuse, et est configuré pour ne pas tolérer de remontées de bruit dans les canaux non utilisés par le signal (par exemple les canaux situés entre le canal 311 et le canal 312). Ce gabarit peut être identique ou différent pour chacun des canaux.

Le filtre multicanaux utilisé par le procédé selon l'invention pour filtrer le signal de crête peut être généré simplement en dimensionnant tout d'abord un filtre prototype par rapport à un unique canal en bande de base, en fonction d'un niveau de puissance maximum admissible dans des sous bandes du canal et des canaux adjacents.

Le type de réponse impulsionnelle utilisée pour générer le filtre influence les performances de la réduction du facteur crête, mais pas le procédé en lui même. Tous les types de réponses impulsionnelles peuvent être envisagés, du moment que le filtre respecte les contraintes de rejections données par le gabarit souhaité du signal.

A partir de ce filtre prototype dont la réponse impulsionnelle est notée h(n), un filtre multicanaux $h_{Total}(n)$ est généré de manière agile, de manière à couvrir l'ensemble des canaux du signal, selon la formule :

$$h_{Total}(n) = \sum_{k=0}^{K-1} h(n).\exp[j.2\pi.F_k.\frac{n}{F_{ech}}], \qquad (1)$$

avec

- K le nombre de canaux utilisés par le signal,
- $F_k$ la fréquence des K canaux, et
- $F_{ech}$ la fréquence d'échantillonnage.

La figure 4a présente un exemple de la réponse impulsionnelle d'un filtre multicanaux utilisé dans le procédé selon l'invention. La courbe 401, en tirets, est la réponse impulsionnelle du filtre prototype utilisé pour générer le filtre multicanaux. Le filtre prototype de l'exemple utilise une réponse impulsionnelle de type « Blackman-Harris ». Les coefficients de ce filtre sont réels.

Les courbes 402, en trait plein, et 403, en pointillés, représentent la partie réelle et la partie imaginaire de la réponse impulsionnelle du filtre multicanaux utilisé dans le procédé selon l'invention.

Le filtre multicanaux ainsi réalisé comporte un nombre de coefficients identique au nombre de coefficients du filtre prototype, et ce indépendamment du nombre de canaux. Sa réponse impulsionnelle est généralement complexe.

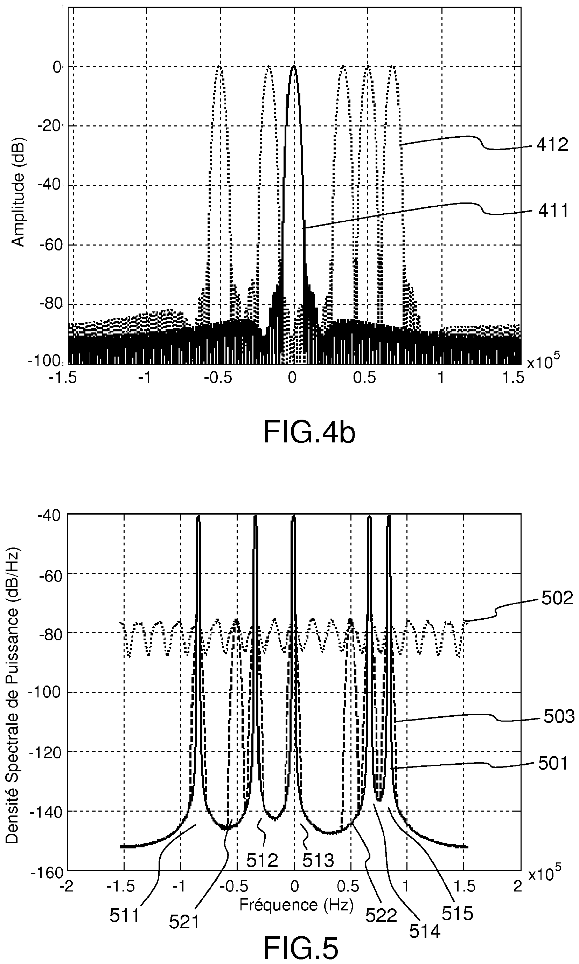

La figure 4b présente un exemple de la réponse fréquentielle du même filtre multicanaux, où la courbe 411, en trait plein, désigne la réponse fréquentielle du filtre prototype, et la courbe 412, en pointillés, la réponse fréquentielle du filtre multicanaux.

Dans le cas où les canaux n'ont pas tous la même largeur, la réalisation du filtre multicanaux peut être faite de manière identique en utilisant plusieurs filtres prototypes de largeurs différentes.

La figure 5 est une représentation fréquentielle du signal à différentes étapes du procédé selon un mode de réalisation de l'invention, lorsqu'il est appliqué à un signal multicanaux comprenant cinq canaux pour le signal utile et deux canaux dédiés à la réduction du facteur crête.

L'invention propose d'utiliser les canaux non utilisés par la transmission car présentant un mauvais rapport signal à bruit, pour transmettre des données destinées à réduire le facteur crête du signal. Ces canaux ne sont pas utilisés pour transmettre des données, et sont donc ignorés par l'équipement de réception. Un tel principe peut être pris en compte dans les protocoles d'adaptation de la forme d'onde à l'environnement de propagation.

La seule variation au mode de réalisation de l'invention présenté en figure 3 réside dans la réalisation du filtre multicanaux, celui-ci étant alors calculé pour ne pas atténuer les fréquences des canaux supplémentaires dédiés à la réduction du facteur crête en plus des canaux utilisés par le signal.

Dans la figure 5, la courbe 501, en trait plein, représente le signal initial, qui utilise cinq canaux 511, 512, 513, 514 et 515.

Dans cet exemple, deux canaux supplémentaires, 521 et 522, sont utilisés pour réduire le PAPR du signal. Le nombre de canaux supplémentaires peut varier, et n'est limité que par la ressource fréquentielle. Les performances du procédé de réduction du facteur crête sont d'autant meilleures que le nombre de canaux supplémentaires augmente.

La courbe 502, en pointillés, représente le signal à la suite de l'étape d'écrêtage. La courbe 503, en tirets, représente le signal après application du procédé selon l'invention de réduction du facteur crête.

L'utilisation d'un filtre multicanaux, conçu pour ne pas atténuer les fréquences des canaux 521 et 522 lors du filtrage du signal de crête 502, entraîne une remontée du spectre dans les canaux 521 et 522, la remontée étant compatible avec les contraintes de gabarit spectral.

La génération d'un tel filtre multicanaux peut se faire de manière identique à la méthode présentée dans l'équation (1), en prenant en compte les canaux supplémentaires 521 et 522.

Le procédé selon l'invention utilise alors des canaux non alloués à la transmission du signal utile, comme par exemple les porteuses dont le rapport signal à bruit gêne l'utilisation pour la transmission de données. Le filtre multicanaux adapté à chacun des canaux utilisés permet de sélectionner les canaux dans ou en dehors de la bande utile du signal. L'utilisation d'un filtre multicanaux généré à partir d'un gabarit spectral prédéterminé calculé pour chaque canal, et ce qu'il s'agisse de canaux utilisés par le signal, de canaux non utilisés par le signal mais utilisés pour favoriser la réduction du facteur crête, ou de canaux non utilisés, permet de garantir le respect de contraintes réglementaires d'émission du signal, que ce soit de façon globale ou canal par canal.

En ce qui concerne l'architecture matérielle de l'émetteur, l'utilisation d'un unique filtre multicanaux et non de N filtres associés chacun à un canal offre une grande souplesse d'adaptation au nombre de canaux utilisés, à leur position et à l'utilisation de canaux dédiés à la réduction du facteur crête. Une telle adaptabilité dans une architecture où le filtrage est réalisé pour chacun des canaux nécessite de prévoir une chaîne de traitement par canal dans la bande de l'émetteur, augmentant ainsi sa complexité, son coût et sa consommation.

De manière à améliorer les performances du procédé, il est possible d'utiliser, lors de l'étape d'écrêtage du signal, un mécanisme d'écrêtage profond.

A la différence de l'écrêtage traditionnel, qui limite et fixe la puissance de sortie à la valeur d'un seuil pour toute puissance supérieure à ce seuil, l'écrêtage profond consiste à diminuer la puissance de sortie pour tout signal dépassant un seuil. L'écrêtage profond comprime donc le signal de crête à une valeur plus faible que le PAPR recherché.

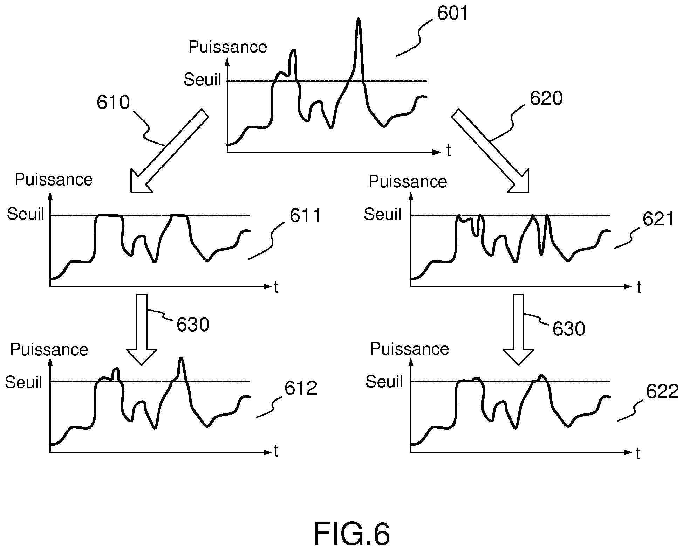

La figure 6 décrit le mécanisme d'écrêtage profond, en le comparant à l'écrêtage traditionnel.

La courbe 601 représente l'évolution dans le temps de la puissance du signal utile à transmettre. Cette puissance est comparée à un seuil, le mécanisme d'écrêtage ayant pour rôle de limiter la puissance du signal à ce seuil.

La courbe 611 représente la puissance du signal, après une étape 610 d'écrêtage traditionnel. Le signal dont la puissance dépasse le seuil a été modifié de manière à ce que la puissance du signal écrêté soit maintenant limitée à la valeur du seuil.

La courbe 612 représente la puissance du signal, après une étape 630 de filtrage du signal écrêté par la méthode de l'écrêtage traditionnel. De par sa nature, le filtrage entraine une remontée des crêtes de la puissance du signal écrêté et filtré à des valeurs supérieures au seuil.

Le mécanisme d'écrêtage profond met en œuvre la relation suivante :

$$out_{DeepClipping}(n) = p(n). \exp[j. \varphi(n)], \qquad (2)$$

avec :

$$p(n) = \begin{cases} \left|in_{DeepClipping}(n)\right| & si & \left|in_{DeepClipping}(n)\right| \leq Seuil \\ Seuil + a_0.\left(\left|in_{DeepClipping}(n)\right| - Seuil\right) & si & \left|in_{DeepClipping}(n)\right| > Seuil \end{cases}, \qquad (3)$$

et

$$\varphi(n) = Arg\left[in_{DeepClipping}(n)\right], \qquad (4)$$

où :

- $in_{DeepClipping}(n)$ est le signal d'entrée de l'algorithme d'écrêtage profond,
- $out_{DeepClipping}(n)$ est le signal de sortie de l'algorithme d'écrêtage profond,
- $a_0$ est la pente de l'algorithme d'écrêtage profond,
- *Seuil* est le seuil de l'algorithme d'écrêtage profond,
- *Arg[x]* est la fonction donnant la phase du signal x.

La courbe 621 représente la puissance du signal, après une étape 620 d'écrêtage profond. Le signal dont la puissance dépasse le seuil a été modifié, de manière à ce que la puissance du signal écrêté soit inférieure à la valeur du seuil d'un niveau inversement proportionnel au niveau de puissance de dépassement du signal initial.

La courbe 622 représente la puissance du signal, après une étape 630 de filtrage du signal écrêté par la méthode de l'écrêtage profond. Les remontées des crêtes de la puissance du signal observées sont bien inférieures aux remontées observées lors de l'utilisation de la méthode d'écrêtage traditionnel.

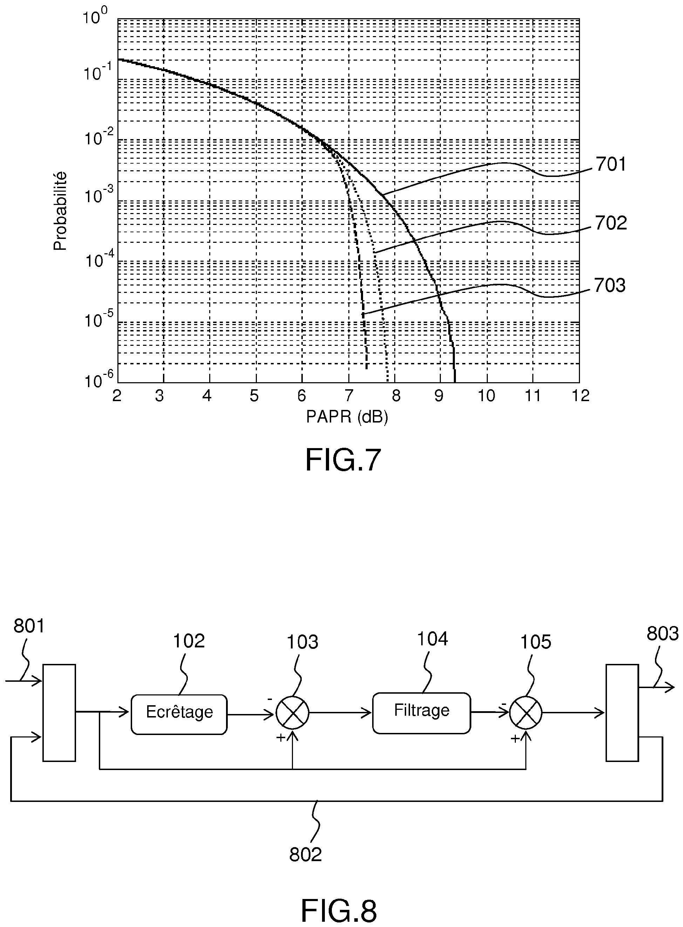

La figure 7 donne les performances du procédé de réduction du facteur crête selon l'invention dans un de ses modes de réalisation.

Dans la figure 7, la courbe 701, en trait plein, donne la fonction de répartition du facteur crête d'un signal transmis sur 5 canaux.

La courbe 702, en pointillés, donne la fonction de répartition du facteur crête du même signal, après application du procédé selon un mode de réalisation de l'invention. Dans ce cas précis et par rapport à contraintes du gabarit spectral, le gain de facteur crête est de 1.5dB environ.

La courbe 703, en tirets, donne la fonction de répartition du facteur crête du signal, après application du procédé selon un mode de réalisation de l'invention. Dans ce cas, deux canaux supplémentaires ont été alloués à la transmission, pour réduire d'autant plus le facteur crête, apportant un gain sur le PAPR, de l'ordre de 0.5dB supplémentaires.

Dans un autre mode de réalisation de l'invention, décrit dans la figure 8, les étapes d'écrêtage 102, de détermination d'un signal de crête 103, de filtrage du signal de crête 104, et de soustraction du signal de crête filtré au signal initial 105, décrites dans le procédé, sont appliquées au signal 801 en provenance du modem. Le signal 802 résultant est rebouclé, et se voit à nouveau appliquer les différentes étapes du procédé selon l'invention. Chaque itération permet d'améliorer le gain de facteur crête.

En effet, comme illustré en 622 sur la figure 2, bien que le principe de l'écrêtage profond, associé au filtrage des crêtes soit efficace et limite les remontées des crêtes, celles-ci restent inévitables. Il peut alors être avantageux de répéter une ou plusieurs fois ces opérations afin de converger vers un signal de sortie 803 atteignant un PAPR cible.

Les itérations permettent de trouver une solution optimale de la relation x-f(x) = 0 sous la forme x(i+1) = f(x(i)), chaque itération permettant d'améliorer le gain en réduction de facteur crête, et ce tant qu'un nombre maximum d'itérations n'est pas atteint.

L'utilisation d'un mécanisme d'écrêtage profond permet de diminuer le nombre d'itérations nécessaires à l'obtention d'un PAPR cible donné.

Le procédé selon l'invention s'applique à un signal numérique en sortie de modem et en amont de la chaîne radio d'émission, préférablement mais non limitativement en bande de base. Les différents modules exécutant les différentes étapes du procédé peuvent être des portions de code enregistrés dans une mémoire non-volatile, et destinés à être exécutés sur une machine de calcul comme par exemple une machine de calcul reprogrammable (un processeur ou un micro contrôleur par exemple) ou une machine de calcul dédiée (par exemple un ensemble de portes logiques comme un FPGA ou un ASIC), ou tout autre module matériel.

Il peut également s'appliquer à un signal analogique, car il ne fait appel qu'à des limiteurs de puissance (comme par exemple un limiteur à diodes), des bancs de filtres analogiques, lignes à retard et sommateurs ou amplificateurs différentiels.

Le procédé est destiné à être implémenté dans un dispositif de radiocommunications émettant un signal utilisant plusieurs canaux. Ce dispositif peut être configuré pour émettre dans la bande HF, mais peut également émettre dans les autres bandes de fréquences, et dans un environnement de propagation autre qu'un environnement radio sans fil, comme par exemple un réseau filaire ou un réseau de fibres optiques.

Les avantages du procédé selon l'invention sont les suivants :

- le procédé est totalement transparent du type de modulation transmis sur chacun des canaux, il se positionne à la sortie du modem et ne nécessite que la connaissance des canaux utilisés et du gabarit spectral d'émission associé à chacun des canaux de transmission,
- le procédé offre une bonne capacité de réduction du PAPR : l'utilisation de l'écrêtage profond permet de limiter la régénération des crêtes provoquées par l'étape de filtrage, et peut si nécessaire être associé à un mécanisme itératif,
- le procédé permet de réduire efficacement le PAPR en fonction du gabarit spectral d'émission : la solution proposée permet de s'adapter au plus juste à un gabarit spectral d'émission et aux canaux disponibles afin d'optimiser le compromis PAPR/niveau d'émission hors bande,
- le procédé permet d'occuper l'ensemble ou un sous ensemble de canaux disponibles pour la transmission, comme les canaux de transmission non occupés pour la transmission de données utiles mais pertinents pour réduire le PAPR,
- sa complexité d'implémentation est limitée, ceci étant du en particulier à l'utilisation d'un filtre multi bande peu complexe, dont les contraintes dans la bande de chaque canal utile sont faibles,
- l'étape de filtrage est réalisée sur un signal de crête, ce qui simplifie le travail de filtrage, et permet de ne pas dégrader le signal utile,

• le procédé peut être implémenté numériquement, sur un signal bande de base en sortie de modem, ou en utilisant des composants analogiques.

**Revendications**

1. Procédé de réduction du facteur crête d'un signal (501) transmis dans une bande de fréquence comprenant plusieurs canaux, le signal utilisant une pluralité de canaux (511, 512, 513, 514, 515) dans la bande, **caractérisé en ce qu'**il comporte :

   • une étape (101) d'écrêtage dudit signal,
   • une étape (102) de soustraction dudit signal écrêté audit signal, afin d'obtenir un signal de crête,
   • une étape (103) de filtrage dudit signal de crête à l'aide d'un seul filtre multicanaux configuré pour respecter un gabarit spectral prédéterminé pour chacun des canaux utilisés par le signal, et
   • une étape (104) de soustraction du signal de crête filtré au signal.

2. Procédé de réduction du facteur crête d'un signal transmis dans une bande de fréquence comprenant plusieurs canaux selon la revendication précédente, dans lequel le gabarit spectral dudit filtre multicanaux est prédéterminé pour chacun des canaux en fonction d'un niveau de puissance maximum admissible dans des sous bandes de ce canal et de ses canaux adjacents.

3. Procédé de réduction du facteur crête d'un signal transmis dans une bande de fréquence comprenant plusieurs canaux selon l'une des revendications précédentes, dans lequel au moins un canal de ladite bande de fréquence, n'est pas utilisé par le signal.

4. Procédé de réduction du facteur crête d'un signal transmis dans une bande de fréquence comprenant plusieurs canaux selon la revendication 2, dans lequel ledit filtre multicanaux est en outre adapté pour ne pas rejeter au moins un canal (521, 522) de la bande de fréquence non utilisé par ledit signal.

5. Procédé de réduction du facteur crête d'un signal dans une bande de fréquence comprenant plusieurs canaux selon la revendication 4, dans lequel le au moins un canal (521, 522) de la bande de fréquence non utilisé par ledit signal est sélectionné parmi les canaux dont le rapport signal à bruit est le moins bon.

6. Procédé de réduction du facteur crête d'un signal transmis dans une bande de fréquence comprenant plusieurs canaux selon l'une des revendications précédentes, dans lequel l'étape d'écrêtage du signal est un écrêtage profond (620).

7. Procédé de réduction du facteur crête d'un signal transmis dans une bande de fréquence comprenant plusieurs canaux selon l'une des revendications précédentes, dans lequel lesdites étapes (101) d'écrêtage du signal, (102) d'obtention d'un signal de crête, (103) de filtrage du signal de crête, et (104) de soustraction du signal de crête filtré au signal sont réalisées itérativement (802).

8. Procédé de réduction du facteur crête d'un signal transmis dans une bande de fréquence comprenant plusieurs canaux selon l'une des revendications précédentes, dans lequel la dite étape de filtrage du signal de crêtes utilise un filtre multicanaux (412) réalisé à partir d'un filtre prototype (411) associé à un gabarit spectral, ledit filtre multicanaux étant obtenu par la sommation dudit filtre prototype décalé en fréquence pour chacun des canaux.

9. Procédé de réduction du facteur crête d'un signal dans une bande de fréquence comprenant plusieurs canaux selon l'une des revendications précédentes, dans lequel les étapes sont réalisées sur un signal numérique en bande de base, en sortie de modem.

10. Dispositif d'émission d'un signal dans une bande de fréquence comprenant plusieurs canaux, ledit signal utilisant une pluralité de canaux dans la bande, **caractérisé en ce qu'**il met en œuvre un procédé de réduction du facteur crête dudit signal selon l'une des revendications précédentes, et **en ce qu'**il comprend :

   • un module (101) d'écrêtage du signal,
   • un module (102) de calcul d'un signal de crête par soustraction d'un signal écrêté au dit signal,
   • un module (103) de filtrage d'un signal de crête à l'aide d'un seul filtre multicanaux configuré pour respecter un gabarit spectral prédéterminé pour chacun des canaux utilisés par le dit signal,
• un module (104) de soustraction d'un signal de crête filtré audit signal.

**11.** Dispositif d'émission d'un signal dans une bande de fréquence comprenant plusieurs canaux selon la revendication 10, dans lequel ledit signal est transmis dans la bande des Hautes Fréquences.

**Patentansprüche**

**1.** Verfahren zum Reduzieren des Scheitelfaktors eines in einem Frequenzband mit mehreren Kanälen übertragenen Signals (501), wobei das Signal mehrere Kanäle (511, 512, 513, 514, 515) in dem Band benutzt, **dadurch gekennzeichnet, dass** es Folgendes beinhaltet:

• einen Schritt (101) des Beschneidens des Signals,
• einen Schritt (102) des Subtrahierens des beschnittenen Signals von dem Signal, um ein Scheitelsignal zu erhalten,
• einen Schritt (103) des Filterns des Scheitelsignals mit Hilfe eines einzelnen Mehrkanalfilters, das zum Einhalten einer vorbestimmten Spektralschablone für jeden der von dem Signal benutzten Kanäle konfiguriert ist, und
• einen Schritt (104) des Subtrahierens des gefilterten Scheitelsignals von dem Signal.

**2.** Verfahren zum Reduzieren des Scheitelfaktors eines in einem Frequenzband, das mehrere Kanäle umfasst, übertragenen Signals nach dem vorherigen Anspruch, wobei die Spektralschablone des Mehrkanalfilters für jeden der Kanäle in Abhängigkeit von einem maximal zulässigen Leistungspegel in Subbändern dieses Kanals und seiner Nachbarkanäle vorbestimmt wird.

**3.** Verfahren zum Reduzieren des Scheitelfaktors eines in einem Frequenzband, das mehrere Kanäle umfasst, übertragenen Signals nach einem der vorherigen Ansprüche, wobei mindestens ein Kanal des Frequenzbandes nicht von dem Signal benutzt wird.

**4.** Verfahren zum Reduzieren des Scheitelfaktors eines in einem Frequenzband, das mehrere Kanäle umfasst, übertragenen Signals nach Anspruch 2, wobei das Mehrkanalfilter ferner so ausgelegt wird, dass es mindestens einen Kanal (521, 522), von dem Signal nicht benutzt, des Frequenzbandes nicht unterdrückt.

**5.** Verfahren zum Reduzieren des Scheitelfaktors eines Signals in einem Frequenzband, das mehrere Kanäle umfasst, nach Anspruch 4, wobei der mindestens eine Kanal (521, 522), von dem Signal nicht benutzt, des Frequenzbandes aus den Kanälen mit dem schlechtesten Signal-Rausch-Verhältnis ausgewählt wird.

**6.** Verfahren zum Reduzieren des Scheitelfaktors eines in einem Frequenzband, das mehrere Kanäle umfasst, übertragenen Signals nach einem der vorherigen Ansprüche, wobei der Schritt des Beschneidens des Signals ein tiefes Beschneiden (620) ist.

**7.** Verfahren zum Reduzieren des Scheitelfaktors eines in einem Frequenzband, das mehrere Kanäle umfasst, übertragenen Signals nach einem der vorherigen Ansprüche, wobei die Schritte (101) des Beschneidens des Signals, (102) des Erhaltens eines Scheitelsignals, (103) des Filterns des Scheitelsignals und (104) des Subtrahierens des gefilterten Scheitelsignals von dem Signal iterativ durchgeführt werden (802).

**8.** Verfahren zum Reduzieren des Scheitelfaktors eines in einem Frequenzband, das mehrere Kanäle umfasst, übertragenen Signals nach einem der vorherigen Ansprüche, wobei der Schritt des Filterns des Scheitelsignals ein Mehrkanalfilter (412) benutzt, das auf der Basis eines mit einer Spektralschablone assoziierten Prototyp-Filters (411) hergestellt wird, wobei das Mehrkanalfilter durch Summieren des frequenzverschobenen Prototyp-Filters für jeden der Kanäle erhalten wird.

**9.** Verfahren zum Reduzieren des Scheitelfaktors eines Signals in einem Frequenzband, das mehrere Kanäle umfasst, nach einem der vorherigen Ansprüche, wobei die Schritte an einem digitalen Basisbandsignal am Modemausgang durchgeführt werden.

**10.** Gerät zum Senden eines Signals in einem Frequenzband, das mehrere Kanäle umfasst, wobei das Signal mehrere Kanäle in dem Band benutzt, **dadurch gekennzeichnet, dass** es ein Verfahren zum Reduzieren des Scheitelfaktors des Signals nach einem der vorherigen Ansprüche implementiert und Folgendes umfasst:

- ein Modul (101) zum Beschneiden des Signals,
- ein Modul (102) zum Berechnen eines Scheitelsignals durch Subtrahieren eines beschnittenen Signals von dem Signal,
- ein Modul (103) zum Filtern eines Scheitelsignals mit Hilfe eines Mehrkanalfilters, das so konfiguriert ist, dass es eine vorbestimmte Spektralschablone für jeden der von dem Signal benutzten Kanäle einhält,
- ein Modul (104) zum Subtrahieren eines gefilterten Scheitelsignals von dem Signal.

**11.** Gerät zum Senden eines Signals in einem Frequenzband, das mehrere Kanäle umfasst, nach Anspruch 10, wobei das Signal im Hochfrequenzband gesendet wird.

**Claims**

**1.** Method for reducing the peak factor of a signal (501) transmitted in a frequency band comprising several channels, the signal using a plurality of channels (511, 512, 513, 514, 515) in the band, **characterized in that** it comprises:

- a step (101) of clipping the said signal,
- a step (102) of subtracting the said clipped signal from the said signal, so as to obtain a peak signal,
- a step (103) of filtering the said peak signal with the aid of a single multichannel filter configured to comply with a predetermined spectral mask for each of the channels used by the signal, and
- a step (104) of subtracting the filtered peak signal from the signal.

**2.** Method for reducing the peak factor of a signal transmitted in a frequency band comprising several channels according to the preceding claim, in which the spectral mask of the said multichannel filter is predetermined for each of the channels as a function of a maximum admissible power level in sub-bands of this channel and of its adjacent channels.

**3.** Method for reducing the peak factor of a signal transmitted in a frequency band comprising several channels according to one of the preceding claims, in which at least one channel of the said frequency band is not used by the signal.

**4.** Method for reducing the peak factor of a signal transmitted in a frequency band comprising several channels according to Claim 2, in which the said multichannel filter is furthermore adapted so as not to reject at least one channel (521, 522), not used by the said signal, of the frequency band.

**5.** Method for reducing the peak factor of a signal in a frequency band comprising several channels according to Claim 4, in which the at least one channel (521, 522), not used by the said signal, of the frequency band is selected from among the channels whose signal-to-noise ratio is the worst.

**6.** Method for reducing the peak factor of a signal transmitted in a frequency band comprising several channels according to one of the preceding claims, in which the step of clipping the signal is a deep clipping (620).

**7.** Method for reducing the peak factor of a signal transmitted in a frequency band comprising several channels according to one of the preceding claims, in which the said steps (101) of clipping the signal, (102) of obtaining a peak signal, (103) of filtering the peak signal, and (104) of subtracting the filtered peak signal from the signal are carried out iteratively (802).

**8.** Method for reducing the peak factor of a signal transmitted in a frequency band comprising several channels according to one of the preceding claims, in which the said step of filtering the signal of peaks uses a multichannel filter (412) embodied on the basis of a prototype filter (411) associated with a spectral mask, the said multichannel filter being obtained by the summation of the said prototype filter shifted in frequency for each of the channels.

**9.** Method for reducing the peak factor of a signal in a frequency band comprising several channels according to one of the preceding claims, in which the steps are carried out on a baseband digital signal, at modem output.

**10.** Device for emitting a signal in a frequency band comprising several channels, the said signal using a plurality of channels in the band, **characterized in that** it implements a method for reducing the peak factor of the said signal according to one of the preceding claims, and **in that** it comprises:

• a module (101) for clipping the signal,

• a module (102) for calculating a peak signal by subtracting a clipped signal from the said signal,

• a module (103) for filtering a peak signal with the aid of a multichannel filter configured to comply with a predetermined spectral mask for each of the channels used by the said signal,

• a module (104) for subtracting a filtered peak signal from the said signal.

11. Device for emitting a signal in a frequency band comprising several channels according to Claim 10, in which the said signal is transmitted in the High-Frequency band.

FIG.1

Fréquence normalisée par rapport à la largeur
de bande du canal utile

FIG.2

FIG.3

FIG.4a

FIG.4b

FIG.5

FIG.6

FIG.7

FIG.8

## RÉFÉRENCES CITÉES DANS LA DESCRIPTION

**Documents brevets cités dans la description**

- WO 2013123580 A1

- EP 2458770 A1

**Littérature non-brevet citée dans la description**

- **LOPEZ DAVID et al.** *Peak Cancellation and Digital Predistortion of High-Order QAM Wideband Signais for Next Generation Wireless Backhaul Equipment,* 2014

- Crest factor reduction for carrier aggregated OFDM systems. **GAURAW KMAR STRIVASTAVA et al.** Software, Telecommunications and computer networks, 2012 20th international conférence on. IEEE, 11 Septembre 2012